# EUROPEAN PATENT APPLICATION

(11) **EP 4 549 913 A1**
(43) Date of publication of application: **07.05.2025**
(21) Application number: 23207028.4
(22) Date of filing: 31.10.2023
(51) Int. Cl.: G01N 21/57, G01N 21/84, G01J 3/46

(54) **METHOD AND SYSTEM FOR DETERMINING A MATTING AGENT LEVEL FOR A CLEARCOAT FORMULATION FOR REPAIRING AN OBJECT**

(71) Applicant: Axalta Coating Systems GmbH, 4057 Basel (CH)
(72) Inventor: MURPHY, Neil R., 4057 Basel (CH)
(74) Representative: LKGlobal UK Ltd.

(57) **Abstract**

Systems and methods for determining a matting agent level for a clearcoat formulation for repairing an object are disclosed. The method comprises the following steps: a) providing a database with multiple datasets, each dataset including a first gloss level value of a sample coating determined at a first measurement geometry and a matting agent level; b) determining a second gloss level value of the sample coating with a measurement arrangement at a second measurement geometry; c) associating the second gloss level value to the dataset of said sample coating; d) determining a third gloss level value of a target coating with the measurement arrangement at the second measurement geometry; e) selecting, from the database, a target dataset with a second gloss level value that is closest to the third gloss level value; and f) determining, from the target dataset, the matting agent level for the clearcoat formulation.

## Description

### Introduction

The present disclosure is directed to a method for determining a matting agent level for a clearcoat formulation for repairing an object. The present disclosure is also directed to a system for determining a matting agent level for a clearcoat formulation for repairing an object.

### Background of the disclosure

Surface coatings containing a matting agent are well known. Matting agents are, for example, favored for the decoration of automobile bodies. The matting agent can produce a desired gloss level appearance. The gloss level appearance effect is dependent upon the amount of matting agent added to a clearcoat formula.

For repairing a previously coated substrate or object, for example, of an automotive body, it is necessary to choose the correct amount of matting agent to match the gloss level of the coated substrate to match the color and appearance of the coated substrate. Many coating formulas are made available by paint suppliers to match various vehicles and objects to be coated.

Often there are multiple coating formulas available for the same vehicle make and model because of vehicle coating color and appearance variability due to slight variations in formulations, ingredients used, coating application conditions such as coating application techniques or locations used by vehicle original equipment manufacturers. These color and appearance variations make it difficult to identify the best formula to attain excellent matches in vehicle shops. A number of methods have been developed to identify formulas of correct pigments to achieve color and appearance match.

In order to identify the amount of matting agent required for a formula to achieve a desired gloss level, measurements are typically taken at predefined illumination and detection or measurement angles. For repairing a substrate, the target coating needs to be measured using the same measurement geometry. However, this requires that a same or identical type of measurement setup and measurement device are used when measuring the sample coating and when measuring the target coating. This might be a cumbersome and expensive approach.

Therefore, a need may exist for simplifying the process of determining a matting agent level for a clearcoat formulation for repairing an object.

### Summary

According to an aspect, a method for determining a matting agent level for a clearcoat formulation for repairing an object comprises the following steps: a) providing a database with multiple datasets, each dataset including a first gloss level value of a sample coating determined at a first measurement geometry and a matting agent level; b) determining a second gloss level value of the sample coating with a measurement arrangement at a second measurement geometry; c) associating the second gloss level value to the dataset of said sample coating; d) determining a third gloss level value of a target coating with the measurement arrangement at the second measurement geometry; e) selecting, from the database, a target dataset with a second gloss level that is closest to the third gloss level; f) determining, from the target dataset, the matting agent level for the clearcoat formulation.

The sample coating may also be referred to as reference coating. The gloss level of the sample coating is measured at a first measurement geometry. The matting agent level of the sample coating is known, so the gloss level of the sample coating measured at the first measurement geometry can be assigned to the known amount of matting agent, i.e., the matting agent level, included in the sample coating.

The database includes the gloss level value and the matting agent level of different sample coatings and can be used as a reference for identifying the required amount of matting agent for a clearcoat to achieve the desired gloss level of a target coating.

The target coating may include a basecoat and a clearcoat, the gloss of the target coating is controlled by the amount of matting agent in the clearcoat formulation. The target coating relates to the coating in an undamaged area of an object to be repaired. In other words, the target coating defines the appearance to be achieved when repairing the object.

In a first step, the object to be repaired is structurally repaired. In a subsequent step, a coating is applied which matches the appearance of the coating in the undamaged areas of the object. Preferably, the coating applied to the damaged and repaired area of the object may extend outside of the repaired area to better blend in with the surroundings of the repaired area.

The gloss level value of the sample coating is measured at a first measurement geometry. Measuring the gloss level value at a first measurement geometry means that the measurement arrangement is located such that it measures reflections, for example specular reflections, from the coating with respect to the surface normal of the object at the measured area.

The measurement arrangement may include an illumination arrangement and a detector arrangement. The illumination arrangement and the detector arrangement may be arranged such that they define an illumination angle, a detector angle, and/or other geometrical specifications. The illumination angle and the detection angle may be symmetric with regard to the surface normal of the object at the measured area, e.g., the illumination angle is -20 degrees, and the detection angle is +20 degrees with regard to the surface normal. In other words, the measurement geometry is defined at least by a measurement angle. The measurement angle defines at which angle the illumination arrangement and the detector arrangement are arranged at the respective side with regard to the surface normal. For example, a measurement angle of 35 degrees means that the illumination angle is -35 degrees, and the detection angle is +35 degrees, or vice versa, with regard to the surface normal. Preferably, the illumination angle and the detection angle both lie in the specular plane defined by the surface normal and the illumination angle.

In order to be able to use different measurement setups (i.e., measurement geometries) and/or measurement arrangements for measuring the gloss level value of the target coating than those used for measuring the gloss level value of the sample coating, the gloss level value of the sample coating is measured at a second measurement geometry and the gloss level measured at the second measurement geometry (second gloss level value) is associated to the first gloss level value already contained in the database.

Subsequently, the second gloss level value is associated to a dataset of the respective sample coating. Thus, a database that includes first gloss level values taken at a first measurement geometry and having assigned a matting agent level assigned to the first gloss level values is supplemented by second gloss level values so that this existing database populated with measurement values of a first measurement setup can be used with gloss level values determined at a different measurement geometry.

In other words, the correlation between the first gloss level value and the matting agent level already exists in the database. A second gloss level is assigned to this existing correlation between the first and the second gloss level value, so that the second gloss level value can be linked to the matting agent level from the initial database.

This approach provides flexibility for using different measurement setups in connection with existing databases that assign gloss level values to matting agent levels.

According to an embodiment, step a) includes: a1) determining the first gloss level value of the sample coating having a known matting agent level with the measurement arrangement at the first measurement geometry; and a2) populating the database with a dataset including the first gloss level value and the known matting agent level of the sample coating.

The steps a1 and a2 describe how the database is populated with the initial correlation between the first gloss level value and the known matting agent level.

According to another embodiment, step a) is repeated multiple times with respective sample coatings having different matting agent levels, and a respective dataset is created for each sample coating.

Thus, the database includes datasets for sample coatings having different matting agent levels.

According to another embodiment, step e) is done by determining, for every dataset of the database, a difference between the third gloss level and the second gloss level, wherein that dataset is selected as the target dataset which has the smallest difference between the third gloss level and the second gloss level.

When the third gloss level value and the second gloss level value have the smallest difference, then the matting agent level assigned to the second gloss level in the database corresponds to the matting agent level in the target coating. The matting agent level can be taken from the respective dataset and applied to the clearcoat formulation for creating a formula that matches the target coating.

According to another embodiment, the second measurement geometry is defined by a second measurement angle selected from a range between 20 degrees and 85 degrees.

As indicated above, the measurement angle defines the relative angular orientation of the illumination arrangement and the detector arrangement, respectively, with respect to the surface normal, while the illumination arrangement and the detector arrangement are arranged on different sides of the surface normal and opposite to each other, i.e., symmetric with respect to the surface normal. The illumination arrangement is preferably oriented such that an emitted light beam is directed to the measurement area and is reflected therefrom to the detector arrangement.

The indicated range of the measurement angle may include 20 degrees and 85 degrees and any angle value in between. In one example, the second measurement angle may be selected from a range between 35 degrees (included) and 55 degrees (included). In one particular example, the second measurement angle is 45 degrees.

One aspect of the present disclosure is that the gloss level value of the target coating is determined or measured at a measurement geometry (second measurement geometry) that is different from the first measurement geometry of measurement values in an existing database and that the gloss level value measured at the second measurement geometry is matched to a dataset in the database taken at another measurement geometry for the same sample coating. In other words, a sample coating with a known matting agent level (i.e., amount of matting agent included in the sample coating) is measured at a first measurement geometry and the measured gloss level value is assigned to the matting agent level included in the sample coating. The same sample coating is measured at a second measurement geometry and the second gloss level value taken at the second measurement geometry is assigned to the dataset in the database that belongs to said sample coating. Thus, in the database, a sample coating is assigned different gloss level values taken at different measurement geometry and a database that is populated with gloss level values taken at a first measurement geometry is assigned with additional gloss level values taken at a second measurement geometry, so that the database can be used to determine the matting agent level even when the gloss level value is measured with another measurement arrangement and at a different measurement geometry than included in the initial database.

According to another embodiment, the second measurement geometry is different from the first measurement geometry.

According to another embodiment, the first measurement geometry is defined by a first measurement angle selected from a range between 20 degrees and 85 degrees.

The indicated range may include 20 degrees and 85 degrees and any angle value in between.

According to another embodiment, each dataset in the database includes at least two first gloss level values, each of which is taken at different first measurement geometries.

The gloss level value of a sample coating may be measured at multiple different geometries and the respective gloss level measurements be assigned to the respective matting agent level to create a dataset (i.e., an entry) in the database. Then, the second gloss level value may be associated to anyone (or more than one) of the multiple first gloss level values available in the database to identify and select a matting agent level for a target coating.

According to another embodiment, each dataset in the database includes three first gloss level values taken at a measurement geometry with a measurement angle of 20 degrees, 60 degrees, and 85 degrees, respectively.

According to another embodiment, associating the second gloss level value to the first gloss level value is done by a linear regression of the second gloss level value versus the first gloss level value.

For example, a curve fit approach may be applied to map the second gloss level measurement to the first gloss level measurement. An equation may be generated that can be used to convert the second gloss level values into the first gloss level values and to then establish the matting agent level.

Alternatively, a curve fit approach may be applied to generate an equation that can be used to determine the matting agent level directly by using the second gloss level value.

According to another embodiment, associating the second gloss level value to the first gloss level value is done by ordinal regression.

Compared to the linear regression, using of an ordinal regression relates to a statistic method that predicts the specific matting agent level based on the correlation between the second gloss level value and the first gloss level value.

According to another embodiment, step d) includes simultaneously determining at least one of reflectance and color sparkle in addition to the gloss level value of the target coating.

Thus, the device used for the gloss level value measurement is configured to measure several characteristics of the target coating. The benefit of this design is that no particular gloss measurement device is needed with the method described herein, but an existing multi-measurement device can be used.

According to another embodiment, the matting agent level is defined by a discrete scale or a continuous scale.

The matting agent level may be indicated by one of multiple steps of matting agent level or by a number on a continuous scale. The continuous scale may be described by a numerical relation or a mathematical formula.

According to another aspect, a system for determining a matting agent level for a clearcoat formulation for repairing an object is provided. The system comprises a control unit with a processor and a memory; a measurement arrangement with an illumination arrangement and a detector arrangement, wherein the measurement arrangement is in operable connection with the control unit. The memory includes a database with multiple datasets, each dataset including a first gloss level value of a sample coating determined at a first measurement geometry and a matting agent level. The control unit is configured to control the illumination arrangement to emit a light beam towards the sample coating, control the detector arrangement to determine a second gloss level value of the sample coating at a second measurement geometry, associate the second gloss level value to the dataset of said sample coating, determine a third gloss level value of a target coating with the detector arrangement at the second measurement geometry, select, from the database, a target dataset with a second gloss level that is closest to the third gloss level, and determine, from the target dataset, the matting agent level for the clearcoat formulation.

The system described herein is configured to execute the steps of any aspect or embodiment of the method described herein. The steps of any aspect or embodiment of the method may be executed by the system and may be implemented as functions of the systems or any of its components, like the control unit in connection with the illumination arrangement and the detector arrangement.

According to an embodiment, the illumination arrangement and the detector arrangement both lie in a specular plane defined by a surface normal of the sample coating and an illumination angle. In other words, the illumination arrangement and the detector arrangement are positioned symmetric with respect to the measurement area and at a given measurement angle with respect to the surface normal as described in more detail above.

### Brief description of the drawings

The drawings are schematic and not to scale. Same reference signs are used for same or similar elements.
- Fig. 1: shows an object with a coating;
- Fig. 2: shows a coating with a damaged area and a coating repair area;
- Fig. 3: shows a measurement setup for measuring gloss level values of a coating of an object;
- Fig. 4: shows a system for determining a matting agent level for a clearcoat formulation for repairing an object;
- Fig. 5: shows a database with multiple datasets;
- Fig. 6: shows the steps of a method for measuring gloss level values of a coating of an object.

### Detailed description

The features and advantages of the present invention will be more readily understood, by those of ordinary skill in the art, from reading the following detailed description. It is to be appreciated that certain features of the invention, which are, for clarity, described above and below in the context of separate embodiments, may also be provided in combination in a single embodiment. Conversely, various features of the invention that are, for brevity, described in the context of a single embodiment, may also be provided separately or in any sub-combination. In addition, references in the singular may also include the plural (for example, "a" and "an" may refer to one, or one or more) unless the context specifically states otherwise.

The use of numerical values in the various ranges specified in this application, unless expressly indicated otherwise, are stated as approximations as though the minimum and maximum values within the stated ranges were both proceeded by the word "about." In this manner, slight variations above and below the stated ranges can be used to achieve substantially the same results as values within the ranges. Also, the disclosure of these ranges is intended as a continuous range including every value between the minimum and maximum values.

As used herein:
"Appearance" used herein refers to (1) the aspect of visual experience by which a coating is viewed or recognized; and (2) perception in which the spectral and geometric aspects of a coating is integrated with its illuminating and viewing environment. In general, appearance can include shape, texture, sparkle, glitter, gloss, transparency, opacity, other visual effects of a coating, or a combination thereof. Appearance can vary with varying viewing angles or varying illumination angles.

The term "gloss" refers to angular selectivity of reflectance, involving surface-reflected light, and is responsible for the degree to which reflected highlights or images of objects may be seen as superimposed on a surface. The "gloss reflectance factor" is the ratio of the specularly reflected part of the (whole) flux reflected from a specimen to the flux reflected from a specified gloss standard under the same geometric and spectral conditions of measurement. The "specular gloss" is the ratio of flux reflected in specular direction to incident flux for a specified angle of incidence and source and receptor angular apertures, and can also be described as the perceived surface brightness associated with the luminous specular (regular) reflection of a surface. A "specular reflection" is a reflection without diffusion, in accordance with the laws of optical reflection, as in a mirror. A standard test method for specular gloss is described in ASTM D523-14.

The term "database" refers to a collection of related information that can be searched and retrieved. The database can be a searchable electronic numerical or textual document, a searchable PDF document, an Microsoft Excel^{®} spreadsheet, an Microsoft Access^{®} database (both supplied by Microsoft Corporation of Redmond, Washington), an Oracle^{®} database (supplied by Oracle Corporation of Redwood Shores, California), or a Linux database, each registered under their respective trademarks. The database can be a set of electronic documents, photographs, images, diagrams, or drawings, residing in one or more computer readable storage media that can be searched and retrieved. A database can be a single database or a set of related databases or a group of unrelated databases. "Related database" means that there is at least one common information element in the related databases that can be used to relate such databases. One example of the related databases can be Oracle^{®} relational databases.

The term "vehicle", "automotive", "automobile", "automotive vehicle", or "automobile vehicle" refers to an automobile such as car, van, minivan, bus, SUV (sports utility vehicle); truck; semitruck; tractor; motorcycle; trailer; ATV (all-terrain vehicle); pickup truck; heavy duty mover, such as, bulldozer, mobile crane and earth mover; airplanes; boats; ships; and other modes of transport that are coated with coating compositions.

A computing device used herein, for example for implementing the functionality of the control unit, can refer to a data processing chip, a desktop computer, a laptop computer, a pocket PC, a personal digital assistant (PDA), a handheld electronic processing device, a smart phone that combines the functionality of a PDA and a mobile phone, or any other electronic devices that can process information automatically. A computing device can be built into other electronic devices, such as a built-in data processing chip integrated into an imaging device, color measuring device, or an appearance measuring device. A computing device can have one or more wired or wireless connections to a database, to another computing device, or a combination thereof. A computing device can be a client computer that communicates with a host computer in a multi-computer client-host system connected via a wired or wireless network including intranet and internet. A computing device can also be configured to be coupled with a data input or output device via wired or wireless connections. For example, a laptop computer can be operatively configured to receive color data and images through a wireless connection. A "portable computing device" includes a laptop computer, a pocket PC, a personal digital assistant (PDA), a handheld electronic processing device, a mobile phone, a smart phone that combines the functionality of a PDA and a mobile phone, a tablet computer, or any other electronic devices that can process information and data and can be carried by a person.

Wired connections, e.g., connections between the control unit and the illumination arrangement and/or the detector arrangement, can include hardware couplings, splitters, connectors, cables or wires. Wireless connections and devices can include, but not limited to, Wi-Fi device, Bluetooth device, wide area network (WAN) wireless device, local area network (LAN) device, infrared communication device, optical data transfer device, radio transmitter and optionally receiver, wireless phone, wireless phone adaptor card, or any other devices that can transmit signals in a wide range of radio frequency including visible or invisible optical wavelengths and electromagnetic wavelengths.

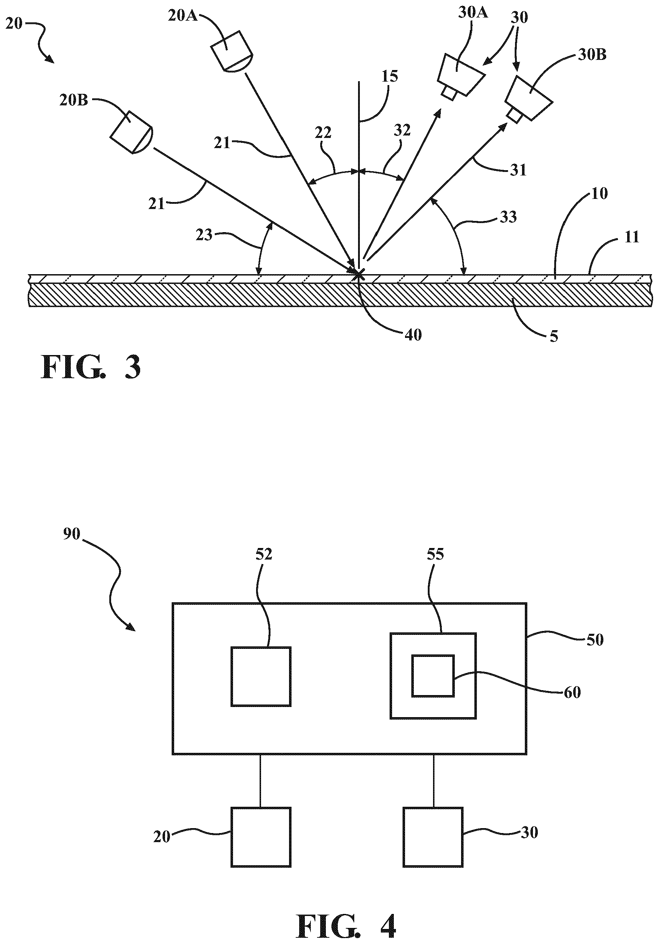

The measurement arrangement may be composed of individual components like an illumination device, a control unit, a detector device. However, the measurement arrangement may preferably be implemented as a single device incorporating all the components thereof in a housing of the measurement arrangement. Details of the measurement arrangement are described with reference to Fig. 3.

The detector arrangement may be or may include a spectrophotometer. Generally, a spectrophotometer is configured to measure reflection or transmission properties of a material as a function of wavelength of electromagnetic waves emitted towards the material. In the present case, the reflection properties are measured. The spectrophotometer may measure the intensity of a light beam at different wavelengths. While referring to "light" and "illumination", this does not limit the method and the device described herein to visible light. The spectrophotometer may use electromagnetic waves including X-ray, ultraviolet light, visible light, infrared light, and/or microwaves.

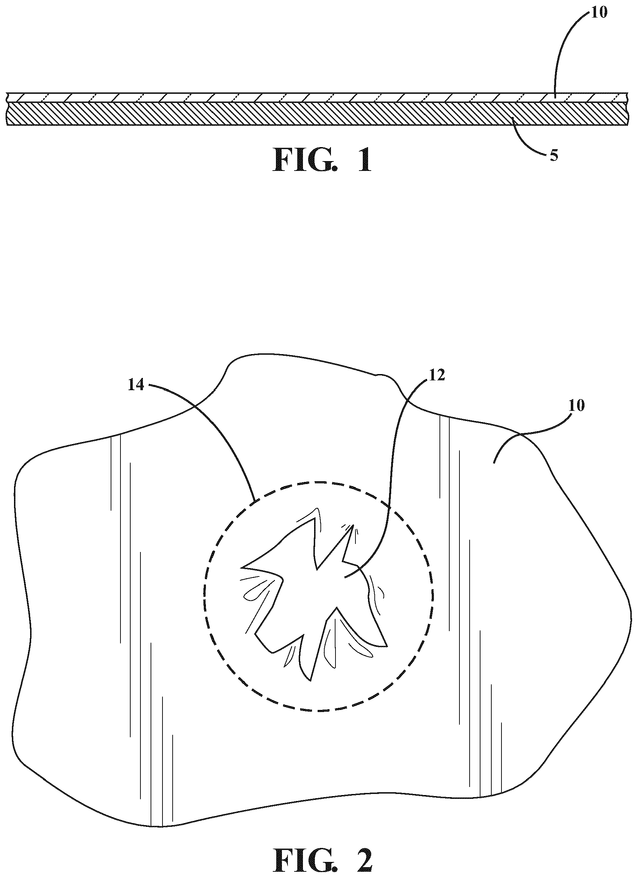

Fig. 1 schematically shows an object 5, like an automotive part or a body, with a coating 10. The coating 10 may include a basecoat and a clearcoat, as appreciated by those skilled in the art.

Fig. 2 schematically shows a coating 10 with a damaged area 12. The underlying object 5 is not shown. However, before repairing the coating 10, the object 5 is first structurally repaired, if needed. The steps for repairing the object 5 are known to those skilled in the art. The damaged area 12 shows the area where at least the coating 10 is damaged and requires repair. The coating repair area 14 may be larger than the damaged area so that the new coating applied to the coating repair area 14 transitions into the target coating, which is the coating surrounding the coating repair area 14.

In order to select an appropriate matting agent level to obtain the gloss level of the target coating, the method and the system described herein are provided, so that the coating repair area 14 has a gloss level that is close to or identical to the target coating 10.

Fig. 3 exemplarily shows an object 5 with a coating 10 having a surface 11. Two illumination devices 20A, 20B of the illumination arrangement 20 are shown at different positions. Two detector devices 30A, 30B of the detector arrangement 30 are shown at different positions. However, it is to be noted that the illumination arrangement may include a single illumination device and/or the detector arrangement may include a single detector device. Preferably, the illumination device(s) 20A, 20B and the respective detector device(s) 30A, 30B are symmetrical to one another with respect to the surface normal 15, i.e., both lie in a specular plane defined by the surface normal 15 of the sample coating and an illumination angle 22 between the illumination device 20A, 20B and the surface normal 15. In the example of Fig. 3, the illumination device 20B and the detector device 30B are symmetric with respect to the surface normal 15, i.e., the illumination angle 23 (shown with reference to the surface 11 of the coating 10) and the detector angle 33 (also shown with reference to the surface 11 of the coating 10) are similar with respect to the surface 11 of the coating 10 and, as a consequence, to the surface normal 15. The same applies to the illumination device 20A and the detector device 30A: the illumination angle 22 (shown with reference to the surface normal 15) and the detector angle 32 (also shown with reference to the surface normal 15) are similar with respect to the surface normal 15 (and, hence, with reference to the surface 11 of the coating 10). The measurement geometry referred to in this description preferably uses symmetric measurement geometries, i.e., a pair of devices 20A/30A and/or 20B/30B.

A measurement arrangement may include one illumination device 20A, 20B and one detector device 30A, 30B. However, the person skilled in the art readily understands that this number of devices is merely an example and the principles presented herein apply to any number of illumination devices and detector devices without varying from the scope of the disclosure.

Multiple illumination devices 20A, 20B may be part of the illumination arrangement 20 and the devices 20A, 20B may be located at different positions with respect to the object 5 resulting in different illumination angles of the respective illumination device 20A, 20B.

The illumination angle of the light beam 21 may be defined with respect to a normal direction 15 on a reference point 40 on a surface 11 of the coating 10 of the object 5, as shown by angle 22. However, the illumination angle may also be defined by an angle 23 with respect to the surface of the coating 23.

Multiple illumination devices 20A, 20B located at different illumination angles may illuminate the coating 10 at the same time or in sequential order to detect the gloss level value of the coating 10.

While two illumination devices 20A, 20B are shown in Fig. 3, the invention is not limited to two illumination devices. The system and method described herein may make use of more than two illumination devices, each of which is located at a different illumination angle. The illumination devices may be located on the same side of the normal 15, i.e., as shown in Fig. 3. However, it is conceivable that the illumination devices are located on different sides with respect to the normal direction 15 on reference point 40.

Now, with respect to the detector arrangement 30, similar considerations apply as presented above with respect to the illumination arrangement 30. The detector arrangement 30 may include more than one detector device 30A, 30B located at different measurement angles 32 (angle value indicated with respect to the normal direction 15) or 33 (angle value indicated with respect to the surface 11 of the coating 10). The detector devices 30A, 30B may be located at the same side or different sides of the normal direction 15 on the reference point 40 on the surface 11 of the coating 10.

While different illumination devices 20A, 20B and detector device 30A, 30B are shown in Fig. 3, it should be noted that the positions shown in Fig. 3 are schematic. Preferably, each of the illumination devices 20A, 20B has a counterpart detector device 30A, 30B located in the same specular plane and being symmetrical with respect to the surface normal 15, i.e., the illumination device 20A, 20B and the detector device 30A, 30B being arranged at different sides of the surface normal 15 and at the same relative angle to the surface normal 15.

The illumination devices 20A, 20B emit a light beam 21 (shown for one illumination device in Fig. 3; it is noted, however, that each illumination device may emit a light beam, either at the same time or in sequential order) and the detector devices 30A, 30B detect a respective reflection 31.

Based on the emitted light beam 21 and the detected reflection 31 as well as the illumination angle and the measurement angle, the control unit (see Fig. 4) determines a gloss level value of the coating 10.

Fig. 4 shows a system 90 for determining a matting agent level for a clearcoat formulation for repairing an object. The system 90 includes a control unit 50, an illumination arrangement 20, and a detector arrangement 30. The illumination arrangement 20 may be the illumination arrangement 20 referred to in Fig. 3 and the detector arrangement 30 may be the detector arrangement 30 also referred to in Fig. 3.

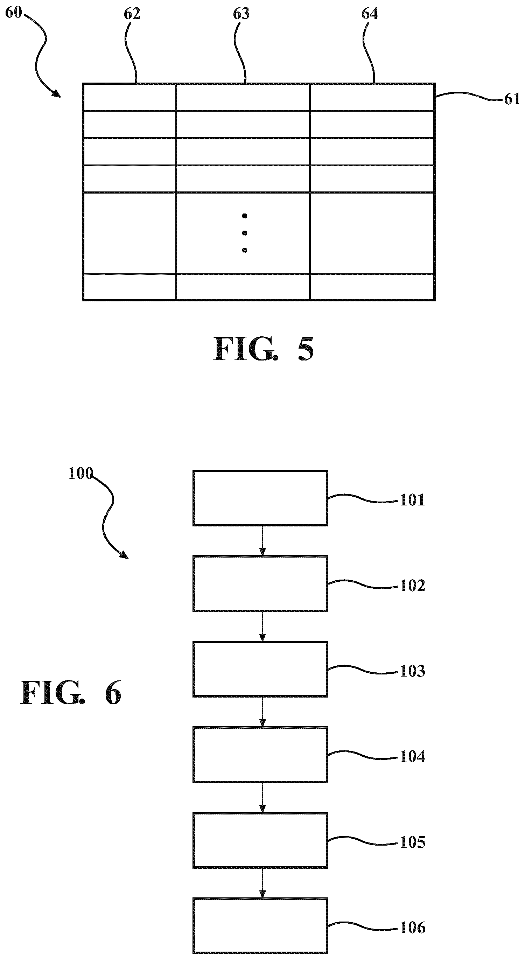

The control unit 50 may be a computing device with a processor 52, a memory 55, and a database 60 being stored in the memory. The processor 52 executes instructions that are stored in the memory 55, thereby executing the steps of the method in accordance with the disclosure (see also Fig. 6 and the related description).

Fig. 5 shows a database 60 with multiple datasets 61. Each row of the graphic representation of the database corresponds to a dataset or an entry in the database.

Each dataset includes multiple values, namely at least a first gloss level value 62 measured at a first measurement geometry, an amount of matting agent 63 to be added to a clearcoat formulation to achieve the first gloss level value 62, and a second gloss level value 64 measured at a second measurement geometry.

The second gloss level value 64 is measured at a different measurement geometry. The second gloss level value 64 is assigned to a respective dataset, for example, by measuring a sample coating with known matting agent level. Thus, the gloss level value 64 is assigned to the dataset with the respective matting agent level.

An initial database may only include the values 62 and 63, and is therefore limited for usage by a measurement device that measures the gloss level value at the measurement geometry of the first gloss level value 62. However, when the gloss level of a coating is measured with a different measurement device at another measurement geometry or by using a different measurement setup, the gloss level value measured this way does not correspond to values 62 of the database. In order to use an existing database that assigns gloss level values to matting agent levels, the gloss level value 64 measured at a second measurement geometry is associated to the gloss level value 62 measured at a first measurement geometry, and the desired matting agent level 63 can be determined even with the gloss level value 64 as a starting point.

Fig. 6 shows a schematic representation of a method 100 for determining a matting agent level for a clearcoat formulation for repairing an object 5. The method 100 comprises the following steps: step a), indicated by 101, providing a database 60 with multiple datasets 61, each dataset 61 including a first gloss level value 62 of a sample coating determined at a first measurement geometry and a matting agent level 63; step b), indicated by 102, determining a second gloss level value 64 of the sample coating with a detector arrangement 30 at a second measurement geometry; step c), indicated by 103, associating the second gloss level value 64 to the dataset 61 of said sample coating; step d), indicated by 104, determining a third gloss level value of a target coating 10 with the detector arrangement 30 at the second measurement geometry; step e), indicated by 105, selecting, from the database 60, a target dataset 61 with a second gloss level value 64 that is closest to the third gloss level value; and step f), indicated by 106, determining, from the target dataset 61, the matting agent level 63 for the clearcoat formulation.

### List of reference signs

- 5: object
- 10: coating
- 11: surface
- 12: damaged area
- 14: coating repair area
- 15: normal direction
- 20: illumination arrangement
- 20A: illumination device
- 20B: illumination device
- 21: light beam
- 22: illumination angle with respect to the normal direction
- 23: illumination angle with respect to the surface of the coating
- 30: detector arrangement
- 30A: detector device
- 30B: detector device
- 31: reflection
- 32: reflection angle with respect to the normal direction
- 33: reflection angle with respect to the surface of the coating
- 40: reference point on surface of the coating
- 50: control unit
- 52: processor
- 55: memory
- 60: database
- 61: dataset
- 62: first gloss level value measured at first measurement geometry
- 63: amount of matting agent
- 64: second gloss level value measured at second measurement geometry
- 90: system
- 100: method

## Claims

1. A method for determining a matting agent level for a clearcoat formulation for repairing an object, the method comprising the following steps:
a) providing a database with multiple datasets, each dataset including a first gloss level value of a sample coating determined at a first measurement geometry and a matting agent level;
b) determining a second gloss level value of the sample coating with a measurement arrangement at a second measurement geometry;
c) associating the second gloss level value to the dataset of said sample coating;
d) determining a third gloss level value of a target coating with the measurement arrangement at the second measurement geometry;
e) selecting, from the database, a target dataset with a second gloss level value that is closest to the third gloss level value;
f) determining, from the target dataset, the matting agent level for the clearcoat formulation.

2. The method of claim 1,
wherein step a) includes:
a1) determining the first gloss level value of the sample coating having a known matting agent level with the measurement arrangement at the first measurement geometry; and
a2) populating the database with a dataset including the first gloss level value and the known matting agent level of the sample coating.

3. The method of claim 2,
wherein step a) is repeated multiple times with respective sample coatings having different matting agent levels, and a respective dataset is created for each sample coating.

4. The method of any one of the preceding claims,
wherein step e) is done by determining, for every dataset of the database, a difference between the third gloss level value and the second gloss level value, wherein that dataset is selected as the target dataset which has the smallest difference between the third gloss level value and the second gloss level value.

5. The method of any one of the preceding claims,
wherein the second measurement geometry is defined by a second measurement angle selected from a range between 20 degrees and 85 degrees.

6. The method of any one of the preceding claims,
wherein the second measurement geometry is different from the first measurement geometry.

7. The method of claim 6,
wherein the first measurement geometry is defined by a first measurement angle selected from a range between 20 degrees and 85 degrees.

8. The method of claim 6 or 7,
wherein each dataset in the database includes at least two first gloss level values, each of which is taken at different first measurement geometries.

9. The method of claim 8,
wherein each dataset in the database includes three first gloss level values taken at a measurement geometry with a measurement angle of 20 degrees, 60 degrees, and 85 degrees, respectively.

10. The method of any one of the preceding claims,
wherein associating the second gloss level value to the first gloss level value is done by a linear regression of the second gloss level value versus the first gloss level value.

11. The method of any one of claims 1 to 9,
wherein associating the second gloss level value to the first gloss level value is done by ordinal regression.

12. The method of any one of the preceding claims,
wherein step d) includes simultaneously determining at least one of reflectance and color sparkle in addition to the gloss level value of the target coating.

13. The method of any one of the preceding claims,
wherein the matting agent level is defined by a discrete scale or a continuous scale.

14. A system for determining a matting agent level for a clearcoat formulation for repairing an object, the system comprising:
a control unit with a processor and a memory;
a measurement arrangement with an illumination arrangement and a detector arrangement, wherein the measurement arrangement is in operable connection with the control unit;
wherein the memory includes a database with multiple datasets, each dataset including a first gloss level value of a sample coating determined at a first measurement geometry and a matting agent level;
wherein the control unit is configured to:
control the illumination arrangement to emit a light beam towards the sample coating;
control the detector arrangement to determine a second gloss level value of the sample coating at a second measurement geometry;
associate the second gloss level value to the dataset of said sample coating;
determine a third gloss level value of a target coating with the detector arrangement at the second measurement geometry;
select, from the database, a target dataset with a second gloss level that is closest to the third gloss level; and
determine, from the target dataset, the matting agent level for the clearcoat formulation.

15. The system of claim 14,
wherein the illumination arrangement and the detector arrangement both lie in a specular plane defined by a surface normal of the sample coating and an illumination angle.
